Europäisches Patentamt

European Patent Office

Office européen des brevets

(19)

(11) Veröffentlichungsnummer : **0 184 688**
**B1**

(12)
# EUROPÄISCHE PATENTSCHRIFT

(45) Veröffentlichungstag der Patentschrift :
**17.05.89**

(21) Anmeldenummer : **85114629.0**

(22) Anmeldetag : **18.11.85**

(51) Int. Cl.⁴ : **B 22 F   9/04**, B 02 C   4/02,
B 02 C  23/06, C 04 B  35/00

(54) Feinteiliges Pulver und Verfahren und Vorrichtung zum Behandeln desselben.

(30) Priorität : **08.12.84 DE 3444847**

(43) Veröffentlichungstag der Anmeldung :
**18.06.86 Patentblatt 86/25**

(45) Bekanntmachung des Hinweises auf die Patenterteilung : **17.05.89 Patentblatt 89/20**

(84) Benannte Vertragsstaaten :
**AT FR GB IT SE**

(56) Entgegenhaltungen :
FR–A– 1 010 163
FR–A– 2 299 413
GB–A–    17 087
US–A– 3 099 080
US–A– 3 498 549

(73) Patentinhaber : **MTU MOTOREN- UND TURBINEN-
UNION MÜNCHEN GMBH**
**Dachauer Strasse 665 Postfach 50 06 40**
**D-8000 München 50 (DE)**

(72) Erfinder : **Hüther, Werner, Dr.-Ing.**
**Nickolaus-Lenau-Strasse 8**
**D-8047 Karlsfeld (DE)**

Jouve, 18, rue St-Denis, 75001 Paris, France

## Beschreibung

Die Erfindung betrifft ein Verfahren und eine Vorrichtung zum Behandeln spröden Pulvers.

Die bekannten Herstellverfahren liefern nur mittlere Korngrößen der Pulver, die je nach Werkstoff im Bereich von etwa einem Mikrometer bis etwa 40 Mikrometer liegen.

Wenn an die Festigkeitseigenschaften von Teilen aus den oben genannten Werkstoffen (spröde Werkstoffe) besonders hohe Anforderungen gestellt werden, stellt sich das Problem, daß die Festigkeit durch die Größe der vorhandenen Gefügefehler in erheblichem Ausmaß bestimmt wird.

Gefügefehler können verursacht werden durch

a) Körner im Ausgangspulver deren Größe die mittlere Korngröße des Pulvers um ein Vielfaches übersteigt,

b) Körner aus Fremdmaterial deren Größe die mittlere Korngröße des Pulvers um ein Vielfaches übersteigt,

c) Poren im Ausgangsmaterial die sich beim Verarbeiten insbesondere Sintern nicht schließen.

Das Schließen von Poren wie im letztgenannten Fall ist selbst unter Anwendung von Druck und Wärme, wie beim Heißisostatischen Pressen aufwendig. In jedem Falle bleiben jedoch die unter a) und b) genannten Körner festigkeitsbegrenzend.

Man hat bereits versucht unerwünschte Partikel aus Pulvern mit bekannten Trennverfahren wie Windsichten, Sedimentation unter Schwerkraft als auch unter Fliehkraft oder dergleichen zu entfernen. Die bekannten Verfahren, konnten jedoch nicht befriedigen, da doch noch unerwünscht große Partikel im Pulver vorhanden sind, wenn auch in geringerer Konzentration. Die bekannten Verfahren sind jedoch technisch und zeitlich sowie kostenaufwendig.

Aus der GB-A-17,087 ist beispielsweise ein gattungsgemäßes Verfahren bekannt, bei dem Erzbrocken zum Zweck des besseren Transportes dadurch zermahlen sind, daß die Brocken zwischen rotierenden Rollen mit oder ohne Wasserbeimengung gebracht werden. Hierdurch soll eine Zerkleinerung aller Brocken auf das Maß des Spaltes zwischen den Rollen erzielt werden.

Die US-A-3,099,080 offenbart ein Zerkleinerungsverfahren mehr für Metallpulver mit einer Partikelgröße von ca 50 μm. Hierbei werden die Partikel mit Öl- oder sonstiger Flüssigkeit zur Bildung einer Suspension vermengt und in einem Kreislauf wiederholt durch die Rollenanordnung mit der Form eines zweireihigen Kegelrollenlagers befördert. Hierdurch ist eine Zerkleinerung der Partikel erzielbar.

Aufgabe der Erfindung ist es, ein Verfahren zu schaffen, und eine Vorrichtung dazu anzugeben, das bzw. die es gestattet, feinteiliges Pulver zu gewinnen, in dem die oben genannten unerwünschten großen Partikel eliminiert sind.

Gelöst wird diese Aufgabe durch die in Anspruch 1 genannten Merkmale. Weitere Merkmale der Erfindung sind den übrigen Ansprüchen sowie der Beschreibung und Zeichnung eines Ausführungsbeispiels zu entnehmen. Abwandlungen hiervon können selbstverständlich vorgenommen werden, ohne hierdurch den Rahmen der Erfindung zu verlassen. Hierzu gehören auch alle Kombinationen und Unterkombinationen der beschriebenen, dargestellten und beanspruchten Merkmale sowohl untereinander als auch mit an sich bekannten Merkmalen.

Die wesentlichsten Vorteile der Erfindung sind :

Auf eine besondere Klassierung mittels aufwendiger Trennverfahren und -vorrichtungen kann verzichtet werden.

Die erfindungsgemäße Vorrichtung ist von einfachem Aufbau und gestattet eine Begrenzung der Maximalgröße von feinteiligen Pulvern.

Die so hergestellten Pulver eignen sich insbesondere für spritzfähige und sinterfähige Keramiken oder intermetallische Phasen, wobei unter Sintern alle Arten von Sinterverfahren wie druckloses Sintern, Reaktions-Sintern sowie gleichzeitigem Anwenden von hohem Druck und Temperatur (HIP) verstanden werden soll. « Spritzen » soll auch strangpressen oder extrudieren bedeuten.

Ein Ausführungsbeispiel der Erfindung ist in der beigefügten Zeichnung rein schematisch dargestellt. Es zeigen :

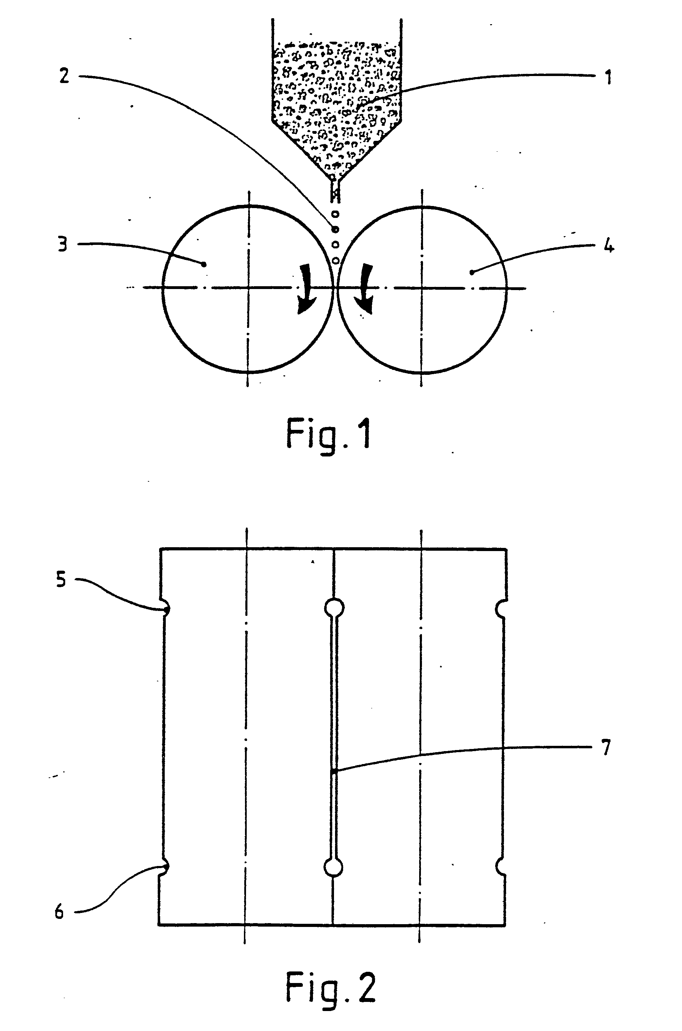

Fig. 1 eine Vorrichtung zur Pulverbehandlung in Vorderansicht

Fig. 2 eine Draufsicht auf das Walzenpaar der Vorrichtung nach Fig. 1.

Beim erfindungsgemäßen Verfahren wird Pulver in einem flüssigen Lösungsmittel mit dem es chemisch nicht reagiert, aufgelöst. Die Suspension wird so eingestellt, daß sie einen hohen Flüssigkeits- und einen niedrigen Feststoffanteil aufweist und letzterer beträgt 25 % und darunter insbesondere 10 % und darunter. Besonders vorteilhaft ist es die Konzentration von Feststoffteilchen in der Flüssigkeit so zu wählen, daß der mittlere Abstand der Teilchen in der Suspension im Bereich bis zum 100-fachen bevorzugt bis zum 2-50fachen der mittleren Teilchengröße des Pulvers liegt.

Diese Suspension wird durch ein Walzenpaar mit einem einstellbaren Spalt geleitet, welcher der Betriebsdauer, d. h., der Durchführung des Arbeitsprozesses Pulverherstellung nachgeschaltet wird. Die Suspension welche im Behälter 1 hergestellt und/oder gesammelt wurde, fällt als Tropfen 2 in den Spalt zwischen den Walzen 3 und 4 welche mit Vorteil gegenläufig angetrieben werden. Die Zufuhr der Suspension und der Antrieb der Walzen wird so eingestellt, daß die Suspension mit Sicherheit durch den Walzenspalt gezogen wird, bevor sie seitlich ablaufen kann.

Hierdurch wird erreicht, daß die zu großen Partikel im Pulver in den Walzenspalt eingezogen und auf etwa die Weite des Walzenspaltes zerkleinert werden.

Es ist vorteilhaft, wenn die Suspension von den Walzen abtropft, ohne auf die Flächen zu gelangen auf denen die Walzen gegeneinander gepreßt werden. Hierzu können neben den Laufflächen ringförmige Ausnehmungen angebracht werden. Es handelt sich dabei um die umlaufenden Ringnuten 5 welche die Flächen 6 begrenzen die axial außen liegen auf denen die Walzen aufeinander laufen. Zwischen den Ringnuten ist der Walzenspalt 7 zu sehen. Dieser ist kleiner als 50 μm, bevorzugt < 25 μm (einstellbar).

Um bei sehr feinen Walzenspalten die gewünschte Spaltweite genau einhalten zu können ist die Gegeneinanderpressung der Laufflächen der Walzen an den Walzenendbereichen vorgesehen. Der Spalt gebildet durch die Ausnehmung im mittleren Teil entweder einer oder von beiden Walzen ist vorherbestimmbar und gewünschtenfalls einstellbar über die außenliegenden Laufflächen (Räder) die u.U. mit einem geeignet nachgiebigen Anpressbelag versehen werden können oder sonstige elastische nachgiebige oder federnde oder andere Einstellmittel mechanischer Art, an sich bekannter Weise, vorsehen. Solche mechanischen Einstellmittel sind an sich bei Zerkleinerungsvorrichtungen wie Mahlwerken und dergleichen bereits vorgesehen worden.

Durch die hohe Verdünnung des Pulvers in der Suspension ist sichergestellt, daß sich gleichzeitig immer nur wenige der — über eine bestimmte Maximalgröße hinaus — zu großen Partikel im Spalt befinden. Die Kräfte, die die Partikel auf die Walzen ausüben bevor sie zerkleinert werden reichen daher nicht aus den Walzenspalt, z. B. durch Auseinanderdrücken der Walze in einem Ausmaß zu vergrößern, das stören würde. Die Walzen werden bevorzugt von einem Elektromotor angetrieben gegensinnig, d. h. die eine im Uhrzeigersinn die andere im Gegenuhrzeigersinn jedoch mit gleicher Drehzahl und im Vergleich zur Zufuhrgeschwindigkeit der Suspension mit relativ hoher Umfangsgeschwindigkeit. Die Steuerung bzw. Regelung des oder der Elektromotoren gegebenenfalls Getriebemotoren ist ebenfalls bekannter Art. Der Fachmann kann sie so auswählen, daß sie dem oben angebenem Zweck der erreicht werden soll, angepaßt sind.

Nachdem die Pulverteilchen auf die vorher bestimmte Maximalgröße gebracht wurden, d. h. aus den Walzen wieder austreten, werden sie getrocknet und gesammelt. Die Flüssigkeit wurde vorher abgetrennt (durch Ablauf insbesondere Abschleudern aus den Ringnuten) oder nachher.

Das erfindungsgemäße Verfahren und die Vorrichtung finden insbesondere Anwendung zur Herstellung von Pulvern für Sinterteile oder Spritzteile aus Werkstoffen wie Keramiken (SiC, Si$_3$N$_4$), (Al$_2$O$_3$, MgO, ZrO$_2$, AlN) oder intermetallischen Phasen (TiAl, TiAl$_3$, NiAl$_3$, NiAl, Ni$_3$Al, Ti$_5$Si$_3$, FeSi). Deren Pulver kann vor dem Mischen bzw. Auflösen in einem Behälter oder Kammer oder dergleichen auf dem Wege der Verdüsung oder Rotationszerteilung insbesondere von Schmelztröpfchen oder anderem chemischen und/oder physikalischen Wege der Zerteilung von Partikeln, wie Feinmahlung gewonnen worden sein. Mit dem erfindungsgemäßen Verfahren hergestellte Werkstoffe aus Pulvern die zu Gegenständen verarbeitet, wie gesintert oder gespritzt sind, lassen sich Bauteile gewinnen, die hochfest sind, d. h. insbesondere hochtemperaturfest, erosionsfest und korrosionsfest bzw. chemisch beständig. Solche Bauteile müssen, insbesondere im Maschinenbau, neben den oben genannten Beanspruchungen zugleich auch mechanischen Beanspruchungen wie durch Fliehkräfte, Druck u. a. Stand halten.

Die Vorrichtung zur Behandlung von feinteiligem Pulver und zur Durchführung des Verfahrens weist ein Walzenpaar auf, zwischen dem ein vorbestimmter fester Spalt vorgesehen ist, über dem ein Behälter mittig über dem Spalt zwischen dem Walzenpaar mit einer Auslaßöffnung, insbesondere mit Dosierventil oder zumindest einstellbarem Querschnitt, angeordnet ist. Die Walzen sind mit je einer Abstreifvorrichtung versehen, mittels der eine Mikrosedimentation ermöglicht wird. In dem Behälter, der auch als Misch- bzw. Auslösungskammer bezeichnet werden kann, kann auch ein üblicher Rührer oder Mischer in an sich bekannter Weise angeordnet sein, Temperiermittel oder sonstige Konditionierungsmittel können gewünschtenfalls dem Behälter zugeordnet werden. Der Behälter kann offen oder verschließbar ausgeführt sein. Das Walzenpaar dessen Antrieb nicht dargestellt ist, kann z. B. aus dem gleichen Material hergestellt sein wie das zu konditionierende Pulver. Es braucht jedoch nicht ganz aus diesem Material zu bestehen, sondern kann eine Oberflächenschicht hieraus aufweisen. Der Vorteil gleichartiger Werkstoffe ist, daß eventueller Walzenabrieb artgleich ist mit dem verarbeiteten Pulver.

Wenn extrem kleine Pulverteilchen gefordert werden, durchläuft die Suspension mehrere Walzen oder Walzenpaare nacheinander. Hierdurch wird sichergestellt, daß falls einer der zu großen Partikel, bedingt durch lokalen Walzenverschleiß in den ersten Walzen, die passiert und in den folgenden Walzen zerkleinert wird. Falls sich im Pulver Verunreinigungen befinden, die sich in den Walzen nicht zerkleinern lassen, müssen diese vorher mit anderen Methoden entfernt werden (bekannte Trennverfahren).

Verunreinigungen können sein z. B. metallische Partikel die sich im Walzenspalt plastisch verformen lassen. Diese werden nass-chemisch ausgewaschen.

Organische Partikel die sich elastisch oder plastisch verformen lassen können durch eine Wärmebehandlung bei 600 °C, gegebenenfalls unter Schutzgas in Kohlenstoff, überführt werden. Der Kohlenstoff wird im Walzenspalt mit Sicherheit zerkleinert. Falls die Natur der organischen Verunreinigung bekannt ist, können diese mit einem Lösungsmittel ausgewaschen werden. Nach dem Durchlaufen des oder der Walzenspalte kann die Suspension in einem Rieselturm noch verdüst und gegebenenfalls getrocknet werden.

Pulver

Ausführungsbeispiel Nr. 1 : Siliziumkarbidpulver, mittlerer Korngröße (< 2 μm), spezifische Oberfläche ~ 15 m²/g, wird vorgereinigt insbesondere mit Flußsäure gewaschen, so daß keine metallischen Verunreinigungen mehr vorhanden sind. Anschließend erfolgt eine Wärmebehandlung des Pulvers unter Argon bei ~ 600 °C in der organische Verunreinigungen beseitigt werden. Danach wird eine Suspension des Pulvers in Wasser hergestellt (200 gr Pulver in 1 l). Die Suspension durchläuft nacheinander drei Walzenspalte der Weite 10 μ, Walzendurchmesser ca. 50 mm, Walzenbreite ca. 200 mm. Walzenwerkstoff : Siliziumkarbid oder Werkstoffe ähnlich hohen E-Moduls und ähnlich hoher Abriebfestigkeit wie Wolframkarbid, Silizium-Nitrid, Achat, es können auch diese oder andere Walzengrundkörper mit Hartstoffen wie Titan-Nitrid, Titan-Karbid, und Bor-Karbid beschichtet werden.

Ausführungsbeispiel Nr. 2 : Als Ausgangspulver dient ein $TiAl_3$-Pulver mit einer mittleren Korngröße von 5 μm. Das Pulver wird zur Vorreinigung in üblicher Weise vorbehandelt z. B. gewaschen. Anschließend erfolgt eine Wärmebehandlung unter Schutzgasatmosphäre etwa bei 600 °C zum Abdampfen organischer Verunreinigungen.

Danach wird eine Suspension des Pulvers in Ethanol hergestellt im Verhältnis 100 gr Pulver auf 1 l Wasser.

Nacheinander durchläuft die Suspension drei Walzenspalte mit einer Spaltenweite von 25 μm, einer Walzenbreite von 300 mm und einen Walzendurchmesser von 80 mm. Walzenwerkstoff : Wolframkarbid oder ein mit Titan-Nitrid beschichteter Walzengrundkörper. Danach wird das Pulver in einem Rieselturm verdüst und dabei getrocknet. Das gesammelte Pulver wird dann anschließend weiterbehandelt z. B. gesintert, gepreßt insbesondere heißgepreßt zu Gegenständen gewünschter Art und Form. Mit Vorteil : Anwendung für hochfeste Bauteile des Maschinen- und chemischen Apparatebaus insbesondere hochbeanspruchte Teile von Kraft- und Arbeitsmaschinen wie Strömungsmaschinen insbesondere Turbinen.

**Patentansprüche**

1. Verfahren zum Behandeln spröden Pulvers mit einer mittleren Korngröße kleiner als 50 μm, bei dem Pulverteilchen in geringer Menge in eine Flüssigkeit eingebracht werden, so daß eine Suspension mit einem Feststoffanteil von kleiner als 25 Gew.-% entsteht, die Suspension durch wenigstens ein an sich bekanntes Paar mit hoher Umfangsgeschwindigkeit angetriebener Walzen geleitet wird, das zwischen sich einen vorher fest eingestellten Spalt einschließt, der der gewünschten Maximalgröße feiner Pulverteilchen entspricht, der Suspension-Durchsatz (Volumen pro Zeit) auf die Walzenbewegung abgestimmt ist und die Flüssigkeit von den Pulverteilchen getrennt von der/den Walze(n) abgeführt wird.

2. Verfahren nach Anspruch 1, dadurch gekennzeichnet, daß die Suspension einen aus Teilchen gebildeten Feststoffanteil von kleiner 10 %, bezogen auf die gesamte Masse aufweist.

3. Verfahren nach Anspruch 1, dadurch gekennzeichnet, daß das eingesetzte Pulver aus spritzfähigen keramischen Werkstoffen besteht.

4. Verfahren nach Anspruch 3, dadurch gekennzeichnet, daß das Pulver SiC, $Si_3N_4$, $Al_2O_3$, MgO, $ZrO_2$, AlN oder Mischungen hiervon ist.

5. Verfahren nach Anspruch 1, dadurch gekennzeichnet, daß das eingesetzte Pulver aus intermetallischen Phasen besteht.

6. Verfahren nach Anspruch 5, dadurch gekennzeichnet, daß das Pulver TiAl, $TiAl_3$, $NiAl_3$, NiAl, $Ni_3Al$, TiC, $Ti_5Si_3$, FeSi oder Mischungen hiervon ist.

7. Vorrichtung zur Behandlung feinteiligen, spröden Pulvers mit wenigstens einem gegenläufig drehbaren Walzenpaar, zwischen dem ein vorbestimmter, fester Spalt vorgesehen ist, über dem ein Behälter mit einer steuerbaren Auslaßöffnung angeordnet ist, mit Mitteln zur Aufrechterhaltung einer Suspension mit einem Feststoffanteil von kleiner als 25 Gew.-%, die in einen Spalt eingeleitet wird, die Walzen mit je einer Abstreifvorrichtung und beidseitig des Spaltes mit umlaufenden Rinnen versehen sind.

**Claims**

1. Process for treating brittle powder with an average grain size of less than 50 μm, in which powder particles are introduced in a small amount into a liquid so that there is a suspension with a solid content of less than 25 % by weight, the suspension is conveyed by at least one pair of rollers, known per se, driven at high rotational speed, which enclose between them a previously fixed gap which corresponds to the desired maximum size of fine powder particles, the suspension throughput (volume per time) is adapted to the roller movement, and the liquid is removed from the powder particles separately from the one or more than one roller.

2. Process according to claim 1, characterised in that the suspension has a solid content, formed of particles, of less than 10 % with respect to the total mass.

3. Process according to claim 1, characterised in that the powder used comprises injectable ceramic materials.

4. Process according to claim 3, characterised in that the powder is SiC, $Si_3N_4$, $Al_2O_3$, MgO, $ZrO_2$, AlN or mixtures thereof.

5. Process according to claim 1, characterised in that the powder used comprises intermetallic phases.

6. Process according to claim 5, characterised in that the powder is TiAl, $TiAl_3$, $NiAl_3$, NiAl, $Ni_3Al$, TiC, $Ti_5Si_3$, FeSi or mixtures thereof.

7. Device for treating fine brittle powder with at least one pair of counter-rotatable rollers, between which a predetermined fixed gap is provided, above which is arranged a container with a controllable outlet aperture, with means for maintaining a suspension with a solid content of less than 25 % by weight which is introduced into a gap, and the rollers are each provided with a stripping device and, on both sides of the gap, with encircling grooves.

**Revendications**

1. Procédé pour traiter une poudre fragile dont la grosseur moyenne des grains est inférieure à 50 μm, dans lequel les particules de poudre sont disposées en faible quantité dans un liquide, de manière à former une suspension ayant une teneur en matières solides inférieure à 25 % en poids, la suspension est conduite entre un couple, en soi connu, de cylindres entraînés à vitesse périphérique élevée, les deux cylindres formant entre eux un intervalle réglé au préalable à une valeur fixe qui correspond à la grosseur maximale souhaitée pour les fines particules de poudre, le débit de suspension (volume par unité de temps) est accordé au mouvement des cylindres et le liquide est évacué d'un ou des cylindres de façon séparée des particules de poudre.

2. Procédé selon la revendication 1, caractérisé en ce que la suspension a une teneur en matières solides, constituées de particules, inférieure à 10 % en la rapportant à la masse totale.

3. Procédé selon la revendication 1, caractérisé en ce que la poudre traitée est constituée de matières céramiques pouvant être injectées.

4. Procédé selon la revendication 3, caractérisé en ce que la poudre est constituée de SIC, $Si_3N_4$, $Al_2O_3$, MgO, $ZrO_2$, AlN ou de mélanges de ces matières.

5. Procédé selon la revendication 1, caractérisé en ce que la poudre traitée est constituée de phases intermétalliques.

6. Procédé selon la revendication 5, caractérisé en ce que la poudre est constituée de TiAl, $TiAl_3$, $NiAl_3$, NiAl, $Ni_3Al$, TiC, $Ti_5Si_3FeSi$ ou de mélanges de ces matières.

7. Dispositif pour traiter une poudre fragile en fines particules, comportant au moins un couple de cylindres entraînés en rotation, en sens inverse, un intervalle fixe prédéterminé étant prévu entre ces cylindres, un récipient qui présente un orifice de sortie commandé étant disposé au-dessus de cet intervalle, des moyens étant prévus pour maintenir une suspension avec une teneur en matières solides inférieure à 25 % en poids, cette suspension étant introduite dans l'intervalle, chacun des cylindres étant muni d'un organe racleur et de rainures périphériques d'un côté et de l'autre de l'intervalle.

Fig. 1

Fig. 2